# EUROPEAN PATENT SPECIFICATION

(11) **EP 0 662 016 B1**
(45) Date of publication and mention of the grant of the patent: **20.08.1997**
(21) Application number: 93921145.4
(22) Date of filing: 13.09.1993
(51) Int. Cl.: B09B 3/00

(54) **METHOD AND MEANS FOR HYGIENIC DISPOSAL OF GARBAGE**
VERFAHREN UND VORRICHTUNG ZUR HYGIENISCHEN ABFALLBESEITIGUNG
PROCEDE ET SYSTEME DE DESTRUCTION HYGIENIQUE DES DETRITUS

(30) Priority: 22.09.1992 SE 9202726
(43) Date of publication of application: 12.07.1995
(73) Proprietor: MICKOS, Kaj, S-131 46 Nacka (SE); STAVE, Anders, S-252 84 Helsingborg (SE)
(72) Inventor: MICKOS, Kaj, S-131 46 Nacka (SE); STAVE, Anders, S-252 84 Helsingborg (SE)
(74) Representative: Waldinger, Ake
(86) International application number: SE9300741
(87) International publication number: WO9406576

(56) References cited:
- EP-A- 0 141 439
- EP-A- 0 316 647
- FR-A- 2 631 520
- PATENT ABSTRACTS OF JAPAN, Vol. 12, No. 365, C-532; & JP,A,63 116 793 (SHARP CORP), 21 May 1988 (21.05.88).

## Description

The present invention relates to a method for hygienic disposal of mainly organic waste from households, public kitchens, industries, etc. by pulverizing, dewatering and drying the waste, the dried final product thereafter being collected in a container.

Furthermore, the invention relates to a means for performing the method mentioned above.

It is already known to feed previously pulverized waste into a means for waste destruction, where the waste after a dewatering is transferred to a chamber, where the waste is placed onto a grill in a combustion chamber. Thereafter, an electrical heating device with a reflector is lowered onto the top of the waste and the waste is dried. Thereafter, the temperature of the heating device is increased so that the waste is burnt.

It is also already known to produce animal food out of garbage. The garbage is compressed and is thereafter sterilized, dewatered by drying or by dehydration, is inspected, screened and granulated.

The hitherto known methods are time comsuming and circumstantial with a transfer of the treated waste between stations and with parts to be continously cleaned of the not very easily handable material.

It is the purpose of the invention to achieve a substantially easier method with a fast and safe device. According to the invention, this is achieved in that the method and the means are adopted with the characteristics, as specified in the claims. This means, that the pulverizing, dewatering and drying and eventually a powdergrinding is performed in an ascending drying air stream passing through a mill, where the material is kept more or less air-suspended during rolling until the material is dry and pulverized. Thereafter, the drying air stream is stopped and the material is instead sucked down into a collecting container, the procedure thereafter being repeated with a new batch of waste.

Thus, the complete treatment of the waste from its entering is performed in one and the same vertical chamber without using any output devices for the waste before it is dried.

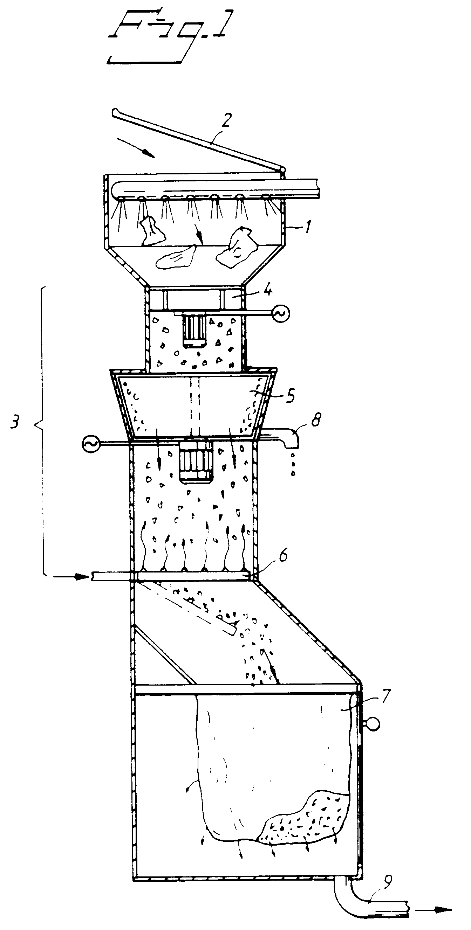

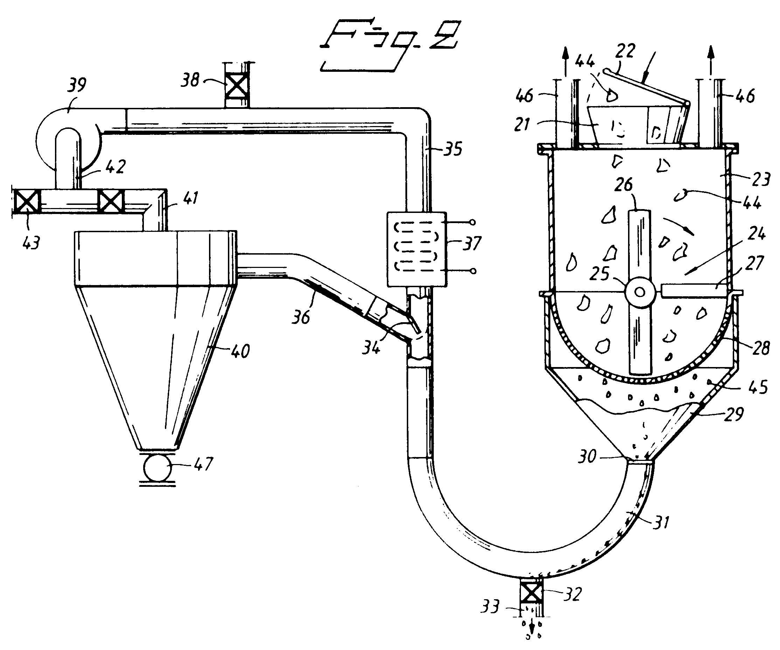

The invention is illustrated more in detail here below in connection with the attached drawings, schematically showing two embodiments as examples of means according to the invention, and where **figure 1** is a schematic vertical section of a first embodiment and **figures 2, 3 and 4** are schematic vertical sections of a second embodiment illustrating three different steps of treatment.

Figure 1 shows a feeding hopper 1 with a sealingly closable cover 2 arranged on top of a vertical, cylindrical chamber 3. In the top thereof a pulverizing means 4 is arranged, in which the waste is pulverized and falls down into the dewatering means below in form of a centrifuge 5. Under it there is a device 6 for blowing in hot drying air. After the material has been dried in the centrifuge 5 it is descending in the air stream and the last material is scraped off, the centrifuge having slowed down. The device 6 is then lowered a bit so that the dry pulverized waste can descend into a collecting container 7. Fluid is leaving the centrifuge 5 through a pipe 8 and air having created a vacuum in the means is leaving through a pipe line 9.

The means has a simple design without any unnecessary material transfer devices, but with a at the same time limited capacity. An essentially increased capacity and a shorter treating period is illustrated by a means according to figures 2-4.

Also this means has a feeding hopper 21 with a sealingly closable cover 22 on top of a vertical, cylindrical chamber 23. In this chamber a mill 24 is situated with an around a horizontal shaft rotatable rotor with radially protruding hammers 26. Furthermore, the mill comprises a stationarily arranged, horizontal screen 27, through the spaces of which the rotor hammers 26 are adapted to pass, during their descending movement, as well as a in a semicircle, perforated bottom plate 28, along which the ends of the rotor hammers 26 are passing with little space in between. Under it a collecting hopper 29 is fastened, at the bottom of which an opening 30 is arranged, to which a pipe line 31 is connected. This line is bending upwards and at its lowest part a draining pipe line 33 for fluid is connected, equipped with a valve 32. The upwards bending part of the pipe line 31 is splitting into two branches 35 and 36 at the two-way valve 34. The branch 35 comprises an electrical air heating device 37 and an outlet valve 38 and is connected to the pressure side of a fan 39. The other branch 36 leads to a cyclone 40 for separating the material transported by an air stream from the air stream itself, this air escaping through a pipe line 41 into the suction side 42 of the fan 39. Furthermore, the pipe line 41 is supplied with a closing valve 43 for alternatingly sending air to the suction side 42 of the fan 39.

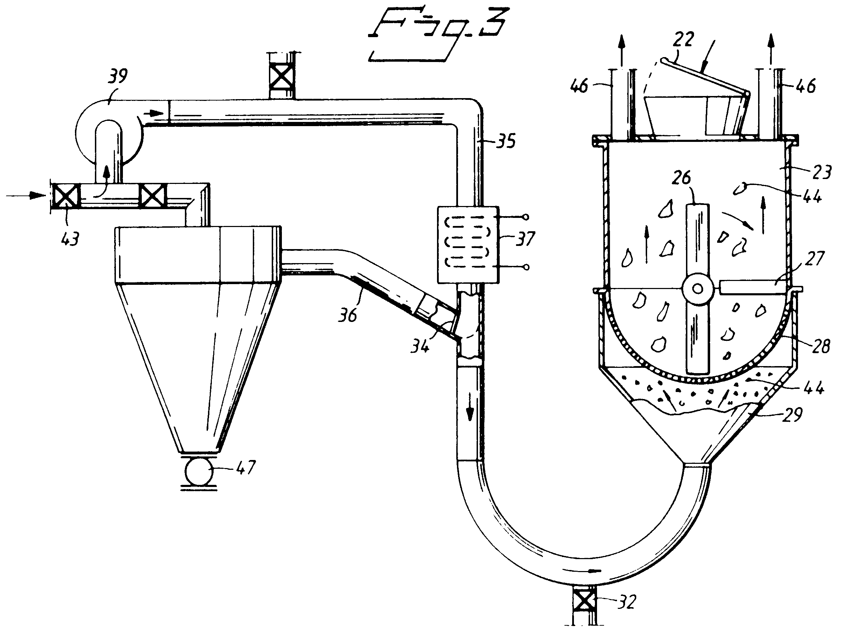

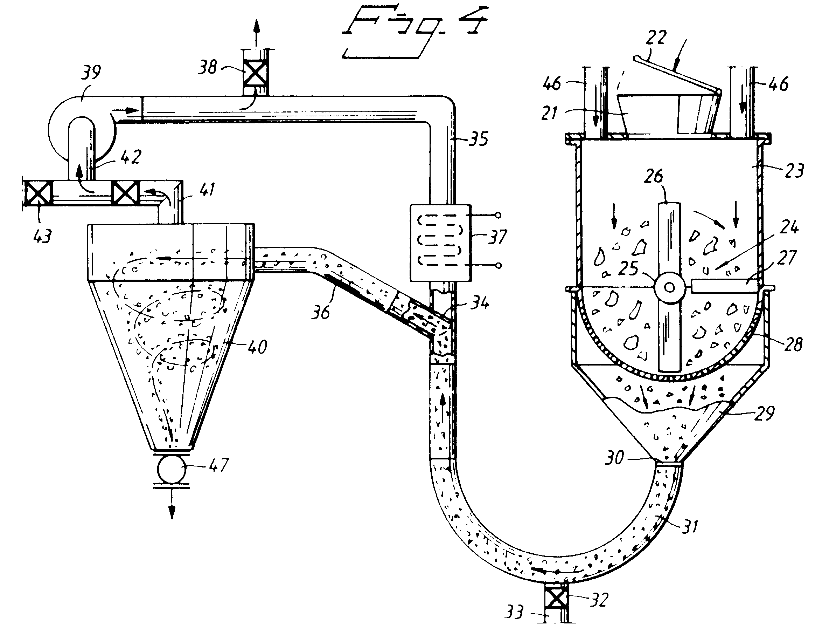

The means according to the figures 2-4 performs as follows. According to figure 2 the waste 44 is fed through the open cover 22, thereby descending into the chamber 23, in which the rotor 26 is slowly rotating and is pressing the waste through the screen 27. Fluid 45 is pressed out of the waste and is dripping and flowing through the perforated bottom plate 28 down into the pipe 31 and out through the open valve 32 into the pipe line 33. When the chamber 23 is sufficiently filled, the cover 22 is closed and the fan 39 starts, sucking air from the outside through the valve 43 and blowing the air through the heating device 37, being connected to the net and heating the passing air in accordance with figure 3. The heated air passes the valve 34 and is led past the closed outlet valve 32 to the chamber 23 via the holes in the bottom plate 28. The rotor 26 is still rotating slowly so that the waste is lifted and is exposed to the hot drying air, escaping through two pipes 46. At the screen 27 larger parts of the waste are devided bit by bit and smaller parts being created will float and whirl around in the air stream, becoming drier and drier. Some parts of the pulverized material are falling through the holes in the bottom plate 28 and are performing a fluidized bed in the conical collecting hopper 29. All waste being completely dewatered and dry, the heating device 37 is turned off and the valve 34 is reversed so that the suction side 42 of the fan 39 is connected to the pipe line 31 in accordance with figure 4. At the same time valve 43 is closed and valve 38 is opened so that the air being sucked in through the pipes 46 and passing the chamber 23, the pipe line 31 and the cyclone 40 can escape through valve 38. Thereafter, the rotational speed of the rotor 26 is substantially increased and is starting a sluice outlet 47 at the bottom of the cyclone 40. Waste particles having passed the about 3 mm large holes in the bottom plate 28 are pulled forward by the air stream and are separated from it in the cyclone 40, where the air escapes to the suction side 42 of the fan and the waste particles are in a conventional way pushed out through the sluice outlet 47. Waste particles in the chamber 23 being too large to pass the holes in the bottom plate 28 are crushed against the screen 27 thereby becoming sufficiently small to be sucked away.

The rotor and its hammers 26 and the screen 27 as well as the perforated bottom plate 28 are arranged for an easy exchange to be shifted after a wear down or for an adaptation to a coarser or a finer grind of the dried waste particles.

Tests have shown that waste treated in this way can be stored for any length of time without any sanitary inconvenience. It can be used as animal food under the condition that no inconvenient waste products are contained or as a soil improvement means or as a fuel.

The means can be adapted to bungalow and flat kitchens, an exemption probably being available from the health authorities for waste collection only e.g. each second or each third week instead of each week, being the normal procedure. As one can see this means large savings.

By connecting the chamber 3 or 23 respectively to an extra evacuating fan during the waste drying, a vacuum can be sustained at all times in the chamber.

## Claims

1. A method for hygienic disposal of mainly organic waste from households, public kitchens, industries, etc. by pulverizing, dewatering and drying the waste, the dried final product thereafter being collected in a container, **characterized in** that the pulverizing, dewatering and drying are performed in a first step in an ascending hot air stream in a vertical, cylindrical chamber (3,23), whereafter the dried material in a second step is sucked by a counterstream out from the chamber into the collecting container (7,40).

2. A method according to claim 1, **characterized in** that a complementary drying step is performed by means of microwaves.

3. A means for performing the method in claim 1, **characterized by** a vertical, cylindrical chamber (3,23) on the top being equipped with an input cover (2,22) or any other feeding device and comprising a pulverizing and dewatering means (4,5; 26,27) and at the bottom being provided with an opening (6,28) and hot air supply means to allow alternating upward feed of said hot air and downward discharge of dried material.

4. A means according to claim 3, **characterized in** that a fan (39) is installed with its pressure side connected to the opening (28) at the bottom of the cylindrical chamber (23) by a pipe line (35,31) comprising the heating device (37) for the air and with its suction side (42) connected to the pipe line (31) between the heating device (37) and the opening (28) at the bottom of the chamber via a suction line (36,41) comprising a cyclone (40) or a similar separating device, and moreover, valves (34,38,43) are arranged for conducting the air stream alternatively to the opening (28) at the bottom of the chamber via the heating device (37) and from the opening at the bottom via the suction line (31,36,41).

5. A means according to claim 3 or 4, **charcterized in** that the cylindrical chamber (23) includes a combined device for pulverizing, dewatering and granulating comprising a rotor (26) rotatable around a horizontal shaft (25) with radially protruding branches , a stationary attached, horizontal screen (27), between the spaces of which the rotor branches are adapted to pass during their descending movement as well as a stationary attached, in a semicircle bent, perforated bottom plate (28), along which the rotor (26) branch ends are movable with little space in between.

## Patentansprüche

1. Verfahren zur hygienischen Beseitigung hauptsächlich organischer Abfälle von Haushalten, öffentlichen Küchen, Industrieunternehmen und dgl. durch Zermahlen, Entwässern und Trocknen des Abfalls, wobei das getrocknete Endprodukt anschließend in einem Behälter gesammelt wird, **dadurch gekennzeichnet**, daß das Zermahlen, Entwässern und Trocknen in einem ersten Schritt in einem aufsteigenden Strom von Heißluft in einer vertikalen, zylindrischen Kammer (3, 23) durchgeführt wird, wonach das getrocknete Material in einem zweiten Schritt von einem gegenläufigen Strom aus der Kammer heraus in den Sammelbehälter (7, 40) gesaugt wird.

2. Verfahren nach Anspruch 1, **dadurch gekennzeichnet**, daß ein ergänzender Trocknungsschritt mit Hilfe von Mikrowellen durchgeführt wird.

3. Vorrichtung zur Durchführung des Verfahrens nach Anspruch 1, **dadurch gekennzeichnet**, daß eine vertikale, zylindrische Kammer (3, 23) an ihrer Oberseite mit einem Einlaßdeckel (2, 22) oder einer sonstigen Zufuhreinrichtung ausgerüstet ist, Mittel (4, 5; 26, 27) zum Zermahlen und Entwässern besitzt und an ihrem Boden mit einer Öffnung (6, 28) und Mitteln zum Zuführen von Heißluft versehen, um abwechselnd eine Zufuhr heißer Luft nach oben und ein Entladen getrockneten Materials nach unten zu ermöglichen.

4. Vorrichtung nach Anspruch 3**, dadurch gekennzeichnet**, daß ein Gebläse (39) eingebaut ist, das mit seiner Druckseite an die Öffnung (28) im Boden der zylindrischen Kammer (23) über eine Rohrleitung (35, 31) angeschlossen ist, die eine Heizvorrichtung (37) für die Luft enthält, und mit seiner Saugseite (42) an die Rohrleitung (31) zwischen der Heizvorrichtung (37) und der Öffnung (28) im Boden der Kammer über eine Saugleitung (36, 41) angeschlossen ist, die einen Fliehkraftabscheider (40) oder eine in ähnlicher Weise trennende Vorrichtung aufweist und daß weiterhin Ventile (34, 38, 43) vorgesehen sind, um den Luftstrom abwechselnd über die Heizvorrichtung (37) zur Öffnung (28) im Boden der Kammer in oder über die Saugleitung (31, 36, 41) von der Öffnung im Boden wegzuleiten.

5. Vorrichtung nach Anspruch 3 oder 4, **dadurch gekennzeichnet**, daß die zylindrische Kammer (23) eine kombinierte Vorrichtung zum Zermahlen, Entwässern und Granulieren enthält, die eine um eine horizontale Welle (25) drehbaren Rotor (26) mit radial wegragenden Armen, einen stationär befestigten, horizontalen Durchlaß (27), zwischen dessen Freiräumen die Rotorarme während ihrer nach unten gehenden Bewegung durchlaufen können, sowie eine stationär befestigte, perforierte Bodenplatte (28) in halbkreisförmiger Biegung besitzt, entlang derer die Armenden des Rotors (26) mit geringem Zwischenraum bewegbar sind.

## Revendications

1. Procédé pour la destruction hygiénique de déchets principalement organiques en provenance des ménages, des cantines publiques, des industries, etc., par pulvérisation, égouttage et séchage des déchets, le produit final séché étant ensuite recueilli dans un conteneur, caractérisé en ce que la pulvérisation, l'égouttage et le séchage sont réalisés, dans une première étape, dans un courant d'air chaud ascendant, dans une chambre verticale cylindrique (3, 23), après quoi le matériau séché est aspiré, dans une seconde étape, par un contre-courant, de la chambre dans le conteneur de récupération (7, 40).

2. Procédé selon la revendication 1, caractérisé en ce qu'une étape de séchage complémentaire est réalisée au moyen de micro-ondes.

3. Moyens pour la mise en oeuvre du procédé selon la revendication 1, caractérisés par une chambre verticale cylindrique (3, 23), dont le dessus est équipé d'un couvercle d'entrée (2, 22) ou de tout autre dispositif d'alimentation et comporte un moyen de pulvérisation et d'égouttage (4, 5; 26, 27) et dont le fond est muni d'une ouverture (6, 28) et d'un moyen de fourniture d'air chaud pour permettre en alternance l'introduction vers le haut dudit air chaud et la décharge vers le bas du matériau séché.

4. Moyens selon la revendication 3, caractérisés en ce qu'un ventilateur (39) est monté avec son côté refoulement relié à l'ouverture (28) du fond de la chambre cylindrique (23), par une conduite (35, 31) comportant le dispositif de chauffage (37) pour l'air, et avec son côté aspiration (42) relié à la conduite (31) entre le dispositif de chauffage (37) et l'ouverture (28) du fond de la chambre, par l'intermédiaire d'une conduite d'aspiration (36, 41) comportant un cyclone (40) ou un dispositif de séparation analogue et, en outre, des vannes (34, 38, 43) sont disposées pour diriger le courant d'air en alternance vers l'ouverture (28) du fond de la chambre, au travers du dispositif de chauffage (37), et à partir de l'ouverture du fond, au travers de la conduite d'aspiration (31, 36, 41).

5. Moyens selon la revendication 3 ou 4, caractérisés en ce que la chambre cylindrique (23) comporte un dispositif combiné de pulvérisation, égouttage et concassage, comprenant un rotor (26) qui peut tourner autour d'un arbre horizontal (25) avec des pales faisant saillie radialement, un tamis horizontal fixé rigidement (27), entre les espaces duquel les pales du rotor sont destinées à passer au cours de leur mouvement descendant, ainsi qu'une plaque de fond perforée (28), recourbée en demi-cercle et fixée rigidement, le long de laquelle les extrémités des pales du rotor (26) peuvent être déplacées avec un faible espace entre elles et ladite plaque.
